# FASCICULE DE BREVET EUROPEEN

(11) **EP 4 226 030 B1**
(45) Date de publication et mention de la délivrance du brevet: **27.11.2024**
(21) Numéro de dépôt: 21786222.6
(22) Date de dépôt: 01.10.2021
(51) Int. Cl.: F02C 7/18, F02C 7/25

(54) **SYSTÈME DE REFROIDISSEMENT D'UN COMPARTIMENT D'ÉQUIPEMENTS DANS UNE NACELLE D'UN ENSEMBLE PROPULSIF D'AÉRONEF**
SYSTEM ZUR KÜHLUNG EINES RAUMS FÜR AUSRÜSTUNG IN EINER GONDEL EINER FLUGZEUGANTRIEBSANORDNUNG
SYSTEM FOR COOLING A COMPARTMENT FOR EQUIPMENT IN A NACELLE OF AN AIRCRAFT PROPULSION ASSEMBLY

(30) Priorité: 06.10.2020 FR 2010187
(43) Date de publication de la demande: 16.08.2023
(73) Titulaire: Safran Nacelles, 76700 Gonfreville-l'Orcher (FR)
(72) Inventeur: CARUEL, Pierre, Charles, 77550 MOISSY-CRAMAYEL (FR)
(74) Mandataire: Argyma
(86) Numéro de dépôt international: PCT/EP2021/077197
(87) Numéro de publication internationale: WO 2022/073890

(56) Documents cités:
- EP-A2- 2 333 288
- WO-A1-2004/055338
- WO-A1-2018/013347
- US-A- 4 301 833
- US-B2- 10 590 799

## Description

### Domaine technique

La présente invention concerne le domaine des nacelles d'ensembles propulsifs d'aéronef et vise plus particulièrement un système de refroidissement d'un compartiment d'équipements.

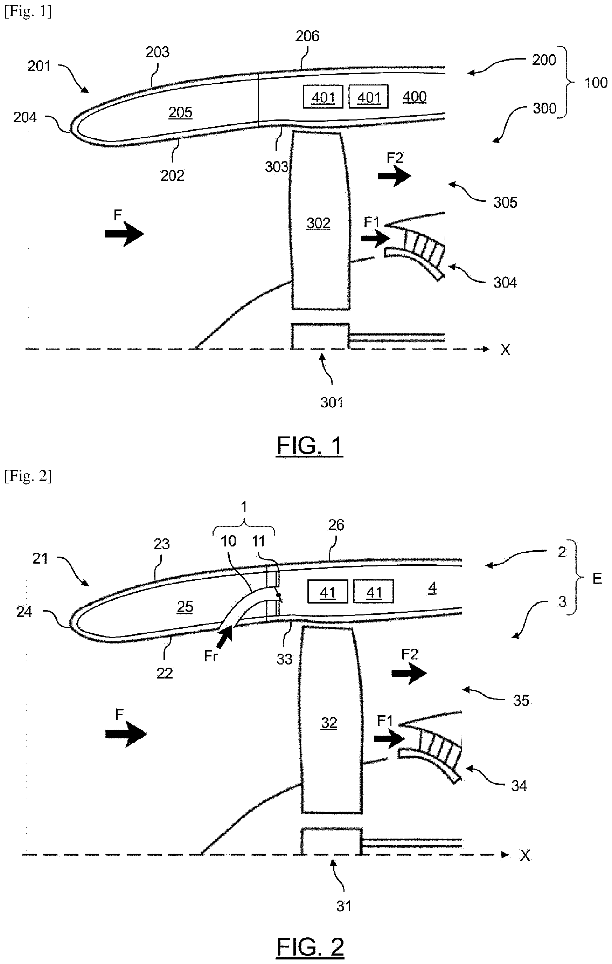

De manière connue, en référence à la [Fig.1], il est représenté un ensemble propulsif d'aéronef 100 s'étendant longitudinalement selon un axe X orienté d'amont en aval et comprenant un turbomoteur d'aéronef à double flux 300 et une nacelle 200 d'axe longitudinal X. Le turbomoteur d'aéronef 300 est configuré pour permettre la propulsion de l'aéronef à partir de l'accélération d'un flux d'air F circulant d'amont en aval dans le turbomoteur 300. La nacelle 200 s'étend extérieurement autour du turbomoteur d'aéronef 300. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

Comme illustré sur la [Fig.1], le turbomoteur d'aéronef à double flux 300 comprend à l'amont une soufflante 301 comportant des aubes 302 permettant d'accélérer le flux d'air F et un carter de soufflante 303 s'étendant extérieurement en regard des aubes 302 de manière à guider extérieurement le flux d'air F. Le turbomoteur d'aéronef 300 comprend également, en aval de la soufflante 303, une veine primaire 304 radialement intérieure et une veine secondaire 305 radialement extérieure dans lesquelles circulent respectivement une première partie et une deuxième partie du flux d'air F, dites flux d'air primaire F1 et flux d'air secondaire F2.

Comme illustré sur la [Fig.1], la nacelle 200 délimite extérieurement la veine secondaire 305 en amont du carter de soufflante 303 et comprend à son extrémité amont une entrée d'air 201. L'entrée d'air 201 comprend une paroi intérieure 202 permettant de guider extérieurement le flux d'air F et une paroi extérieure 203, opposée à la paroi intérieure 202, qui sont reliées par une lèvre d'entrée d'air 204 de manière à former une cavité annulaire 205. La nacelle 200 comprend également un capot de soufflante 206 s'étendant dans le prolongement aval de la paroi extérieure 203, le carter de soufflante 303 s'étendant dans le prolongement aval de la paroi intérieure 202 de manière opposée au capot de soufflante 206.

Toujours en référence à la [Fig.1], le capot de soufflante 206 et le carter de soufflante 303 délimitent ensemble radialement un compartiment 400 dans lequel sont logés des équipements 401 de l'ensemble propulsif d'aéronef 100. De tels équipements 401 désignent à titre d'exemples des éléments du circuit de carburant et du circuit d'huile (pompe, filtre, débitmètre, etc.), un dispositif d'ouverture d'un système d'inversion de poussée à portes, un dispositif de fourniture d'air chaud à l'entrée d'air 201, etc.

En pratique, il est nécessaire de refroidir le compartiment 400 pour éviter toute surchauffe des équipements 401. Le compartiment 400 doit également être isolé fluidiquement du turbomoteur 300 de sorte qu'en cas d'un éventuel départ de feu dans le compartiment 400, celui-ci ne se propage pas dans le turbomoteur 300, c'est-à-dire, dans le flux d'air primaire F1 et dans le flux d'air secondaire F2.

Il est connu par la demande de brevet FR3081514A1 de faire circuler un flux d'air de refroidissement dans le compartiment 400 qui est prélevé dans le flux d'air F admis dans le turbomoteur 300. Une vanne est ajoutée au niveau de l'admission du flux d'air de refroidissement, sa fermeture étant déclenchée en cas de départ de feu, manuellement ou automatiquement au-dessus d'un seuil de température prédéterminé. En position fermée, la vanne permet d'isoler le compartiment du flux d'air primaire F1 et du flux d'air secondaire F2, ce qui évite toute propagation du feu. Un tel système permet avantageusement de refroidir efficacement le compartiment 400 lorsque l'aéronef est en vol. Lorsqu'il est au sol, la quantité d'air de refroidissement n'est pas suffisante, ce qui présente des inconvénients.

Il est également connu par la demande de brevet WO2004055338A1 d'alimenter le compartiment grâce à un conduit de flux d'air comportant deux clapets montés pivotants entre une position ouverte et une position fermée. Un ressort maintient les clapets en position ouverte. Lorsque la différence de pression entre l'intérieur et l'extérieur du compartiment dépasse un seuil, le flux d'air déplace les clapets en position fermée en surmontant la force de rappel du ressort. Un tel conduit ne permet pas un refroidissement efficace pour toutes conditions de fonctionnement de l'aéronef.

L'invention vise ainsi un système de refroidissement de compartiment 400 qui soit efficace à la fois lorsque l'aéronef est en vol et au sol et qui permette, en cas de feu dans le compartiment 400, d'éviter la propagation du feu dans le turbomoteur 300.

### PRESENTATION DE L'INVENTION

L'invention concerne un système de refroidissement d'un compartiment d'équipements dans une nacelle d'un ensemble propulsif d'aéronef, ledit système de refroidissement comprenant au moins un organe de prélèvement d'un flux d'air de refroidissement à partir d'un flux d'air extérieur à la nacelle et au moins un dispositif d'admission du flux d'air de refroidissement dans le compartiment, ledit dispositif d'admission comprenant :
- au moins une paroi délimitant l'entrée du compartiment et comprenant au moins un orifice de mise en communication fluidique de l'organe de prélèvement et du compartiment,
- au moins un organe de régulation du flux d'air de refroidissement admis dans le compartiment, monté mobile au niveau de l'orifice :
   - selon un premier sens de déplacement limitant la section de passage de l'orifice lorsque la pression interne du compartiment est inférieure à la pression externe, de manière à limiter le flux d'air de refroidissement admis, et
   - selon un deuxième sens de déplacement augmentant la section de passage de l'orifice lorsque la pression interne est supérieure à la pression externe, de manière à augmenter le flux d'air de refroidissement admis,
- au moins un organe de rappel reliant la paroi et l'organe de régulation et configuré :
   - lorsque la pression interne est égale à la pression externe, pour maintenir l'organe de régulation dans une position ouverte neutre définissant une section de passage prédéterminée et
   - lors de modifications du rapport entre la pression interne et la pression externe, pour amortir le déplacement de l'organe de régulation par rapport à la position ouverte neutre,
- au moins un dispositif de sécurité comprenant au moins un organe de plaquage monté en attente sur la paroi et configuré pour exercer un effort de plaquage sur l'organe de régulation supérieur à un effort de contrainte de l'organe de rappel, de manière à déplacer l'organe de régulation dans une position fermée obturant l'orifice, afin d'isoler fluidiquement le compartiment en cas de feu, le dispositif de sécurité comprenant au moins un élément sensible thermiquement configuré pour activer l'organe de plaquage lorsque la température interne du compartiment est supérieure à une température prédéterminée.

Le système de refroidissement de l'invention permet avantageusement de refroidir efficacement un compartiment d'équipements d'un ensemble propulsif d'aéronef, peu importe les conditions de vol de l'aéronef et notamment au sol, tout en formant un pare-feu en cas de déclenchement d'un feu dans le compartiment. Un tel pare-feu permet notamment d'empêcher le transport de la flamme par convection du compartiment d'équipements vers la soufflante au sol et à faible vitesse, dans le cas où la pression externe au niveau de la soufflante est inférieure à la pression interne dans le compartiment.

Plus précisément, l'organe de régulation permet avantageusement de contrôler la quantité de flux d'air de refroidissement admise dans le compartiment, en augmentant la section de passage de l'orifice lorsque la pression interne dans le compartiment d'équipements est supérieure à la pression externe du flux d'air de refroidissement prélevé, tel qu'au sol et à faible vitesse à titre d'exemples, et en réduisant la section de passage de l'orifice lorsque la pression interne est inférieure, tel que dans certaines conditions de vol à haute vitesse. Autrement dit, le flux d'air de refroidissement admis varie proportionnellement avec la différence de pression entre l'intérieur et l'extérieur du compartiment d'équipements. Ceci est réalisé par simple déplacement de l'organe de régulation sous l'effet de l'effort exercé par le flux d'air de refroidissement, à savoir de manière simple, immédiate et passive, c'est-à-dire sans intervention humaine. L'effort exercé par le flux d'air de refroidissement s'oppose avantageusement à celui de l'organe de rappel qui maintient au repos l'organe de régulation ouvert à une position prédéterminée. On précise que le terme « amortir » employé ci-dessus signifie que l'organe de rappel est configuré pour s'opposer au déplacement de l'organe de régulation généré par la différence de pression entre l'intérieur et l'extérieur du compartiment, de manière à maîtriser le déplacement de l'organe de régulation.

Outre sa fonction de régulateur, le système de refroidissement forme avantageusement un pare-feu par simple fermeture de l'organe de régulation. La fermeture de l'organe de régulation est avantageusement mise en oeuvre par l'organe de plaquage activé par l'élément sensible thermiquement, autrement dit de manière immédiate et sans intervention humaine, dès lors que la température du compartiment est anormalement élevée.

Selon un aspect de l'invention, l'organe de régulation est monté mobile en rotation, de manière à présenter une structure simple et économique.

Selon un aspect de l'invention, l'organe de régulation se présente sous la forme d'une vanne papillon montée selon un axe délimitant une portion de maintien, sur laquelle est monté l'organe de rappel, et une portion libre. La section de passage de l'orifice est ainsi contrôlée par un unique organe de régulation monobloc, de structure simple et économique. La position de la vanne papillon résulte de l'équilibre de l'effort de contrainte exercé par l'organe de rappel, de la pression interne du compartiment et de la pression externe, qui dépend du flux d'air de refroidissement.

Selon un aspect, l'axe de montage de l'organe de régulation est décentré, la portion de maintien ayant une longueur réduite par rapport à celle de la portion libre. Autrement dit, l'organe de rappel est monté sur une portion de maintien réduite de l'organe de régulation, pour réduire son encombrement ainsi que l'effort de contrainte qu'il exerce, en limitant le bras de levier. Le flux d'air de refroidissement agit quant à lui essentiellement sur la portion libre.

Selon un aspect de l'invention, dans la position ouverte neutre, la portion libre de l'organe de régulation s'étend en saillie vers l'extérieur du compartiment. Une telle configuration permet avantageusement au flux d'air de refroidissement d'exercer un effort sur la portion libre qui tend à réduire la section de passage de l'orifice lorsque la pression externe est supérieure à la pression interne.

De préférence, l'organe de régulation dans la position ouverte neutre comprend un degré d'ouverture compris entre 10 et 30°. Un tel degré d'ouverture est optimal pour un faible flux de refroidissement.

Selon un aspect de l'invention, l'organe de rappel et l'organe de plaquage sont respectivement configurés pour exercer un effort de contrainte et un effort de plaquage sur des faces opposées de l'organe de régulation. L'organe de plaquage permet ainsi de fermer sans attente l'organe de régulation peu importe sa position et le flux d'air de refroidissement. En effet, l'effort de plaquage exercé est supérieur à la somme de l'effort de contrainte et de l'effort maximal généré sur l'organe de régulation par la différence de pression entre l'intérieur et l'extérieur du compartiment d'équipements. L'organe de plaquage permet ainsi une mise en sécurité simple et immédiate du compartiment dès que nécessaire. De préférence, l'organe de plaquage est configuré pour venir au contact de la face interne de l'organe de régulation tournée vers le compartiment. De préférence, l'organe de rappel est monté sur une face externe de l'organe de régulation opposée à la face interne.

Selon un aspect, l'organe de plaquage se présente sous la forme d'un ressort de plaquage. De préférence, l'organe de rappel se présente sous la forme d'un ressort de contrainte. De préférence, le ressort de plaquage comporte une constante de raideur supérieure à une constante de raideur du ressort de contrainte, de préférence au moins deux fois supérieure. Un tel ressort de plaquage permet de fermer l'organe de régulation de manière efficace.

Selon un aspect, l'élément sensible thermiquement est monté de manière à retenir l'organe de plaquage contraint lorsque la température interne du compartiment est inférieure à la température prédéterminée. De manière avantageusement, le ressort de plaquage ainsi contraint permet d'exercer un effort de plaquage immédiat lorsqu'il est libéré.

De préférence, l'élément sensible thermiquement est monté sur la face interne de la paroi de manière à être au contact de la température interne du compartiment. De préférence, l'élément sensible thermiquement est interposé entre la paroi et l'organe de plaquage de manière à maintenir l'organe de plaquage contraint.

Selon un aspect, l'élément sensible thermiquement comporte un matériau configuré pour fondre lorsque la température interne du compartiment est supérieure à la température prédéterminée, ce qui permet une activation simple et rapide, non réversible, de l'organe de plaquage. De préférence, l'élément sensible thermiquement comporte un alliage d'aluminium.

Selon un autre aspect, l'élément sensible thermiquement comporte au moins deux matériaux configurés pour se dilater de manière différente lorsque la température interne du compartiment est supérieure à la température prédéterminée, ce qui permet une activation simple, rapide et réversible de l'organe de plaquage. De préférence, l'élément sensible thermiquement comporte uniquement deux matériaux configurés pour se dilater de manière différente lorsque la température interne du compartiment est supérieure à la température prédéterminée, se présentant préférentiellement sous la forme de deux lames distinctes reliant de manière différente l'organe de plaquage et la paroi.

De préférence, la température prédéterminée est comprise entre 200°C et 600°C, préférentiellement entre 350°C et 450°C, supérieure à la température normalement constatée dans le compartiment, ce qui permet de détecter au plus vite un départ de feu et éviter sa propagation hors du compartiment, notamment dans le turbomoteur de l'aéronef.

Selon un aspect préféré de l'invention, l'organe de plaquage comprend une première extrémité de support fixée sur la paroi et une extrémité libre configurée pour venir au contact de l'organe de régulation. De préférence, l'organe de plaquage se présente sous la forme d'un ressort de plaquage, préférentiellement d'une lame ressort, simple et économique. De préférence, l'organe de plaquage comprend une deuxième extrémité de support montée sur l'élément sensible thermiquement. De préférence, les extrémités de support de la lame ressort sont recourbées pour augmenter son élasticité.

De préférence, l'organe de rappel se présente sous la forme d'une lame ressort simple et économique. De préférence, la lame ressort comprend deux extrémités de support montées sur la paroi et sur l'organe de régulation, préférentiellement recourbées pour augmenter l'élasticité de l'organe de rappel.

Selon un aspect préféré, la paroi forme une butée pour l'organe de régulation dans la position fermée. De préférence, l'organe de plaquage est configuré pour retenir l'organe de régulation contre la paroi dans la position fermée. La position fermée isole ainsi de manière étanche et sécurisée le compartiment.

Selon un aspect préféré, le dispositif d'admission du système de refroidissement comprend une pluralité de ressorts de contrainte, de manière à appliquer une pluralité d'efforts de contrainte répartis sur l'organe de régulation plutôt qu'un unique effort de contrainte important en un point, et de garantir le fonctionnement en cas de défaillance d'un des ressorts.

De préférence, le dispositif d'admission du système de refroidissement comprend le même nombre d'organes de plaquage et de ressorts de contrainte, de préférence montés en vis-à-vis par rapport à la paroi. Ceci améliore la fermeture de l'organe de régulation en cas de feu et garantit le fonctionnement en cas de défaillance d'un des ressorts. De préférence, le dispositif de sécurité comprend le même nombre d'éléments sensibles thermiquement et d'organes de plaquage reliés deux à deux.

L'invention concerne également une nacelle d'un ensemble propulsif d'aéronef comprenant un turbomoteur s'étendant longitudinalement selon un axe orienté d'amont en aval et configuré pour permettre la propulsion de l'aéronef à partir de l'accélération d'un flux d'air circulant d'amont en aval dans le turbomoteur, ladite nacelle s'étendant extérieurement autour du turbomoteur selon l'axe longitudinal, délimitant extérieurement le compartiment et comprenant un système de refroidissement tel que décrit précédemment.

De préférence, la nacelle comprend à l'amont une entrée d'air comprenant une paroi intérieure permettant de guider le flux d'air et une paroi extérieure, opposée à la paroi intérieure, qui sont reliées par une lèvre d'entrée d'air, et l'organe de prélèvement du système de refroidissement débouche dans la paroi intérieure de l'entrée d'air de manière à prélever le flux d'air. Le flux d'air de refroidissement ainsi prélevé au niveau de l'entrée d'air est avantageusement frais et permet un refroidissement efficace. De plus, à faible vitesse de l'aéronef, la pression interne est inférieure à la pression ambiante, ce qui permet d'assurer un débit minimal d'aspiration du flux d'air de refroidissement.

De préférence, l'organe de prélèvement se présente sous la forme d'une conduite s'étendant dans la cavité annulaire de l'entrée d'air permettant de guider le flux d'air de refroidissement vers l'orifice de manière simple et pratique.

De préférence, le système de refroidissement comprend un unique orifice s'étendant sur une section de la circonférence de la nacelle, permettant à lui seul d'assurer un refroidissement suffisant.

L'invention concerne également l'ensemble d'un système de refroidissement tel que décrit précédemment et d'un compartiment d'équipements d'un ensemble propulsif d'aéronef, la paroi du dispositif d'admission délimitant l'entrée du compartiment.

L'invention concerne également l'ensemble d'une nacelle telle que décrite précédemment et d'un compartiment d'équipements, la nacelle délimitant extérieurement le compartiment, la paroi du dispositif d'admission délimitant l'amont du compartiment.

L'invention concerne également un ensemble propulsif d'aéronef comprenant un turbomoteur et l'ensemble d'une nacelle et d'un compartiment d'équipements tel que décrit précédemment, le turbomoteur s'étendant longitudinalement selon un axe orienté d'amont en aval et configuré pour permettre la propulsion de l'aéronef à partir de l'accélération d'un flux d'air circulant d'amont en aval dans le turbomoteur, ladite nacelle s'étendant extérieurement autour du turbomoteur selon l'axe longitudinal.

De préférence, le turbomoteur comprenant une soufflante comprenant des aubes et un carter de soufflante monté en regard, la nacelle comprenant un capot de soufflante s'étendant dans le prolongement aval de la paroi extérieure de l'entrée d'air, le carter de soufflante s'étendant dans le prolongement aval de la paroi intérieure de manière opposée au capot de soufflante, le capot de soufflante et le carter de soufflante délimitent ensemble radialement le compartiment.

L'invention concerne par ailleurs un procédé d'utilisation d'un système de refroidissement d'un compartiment d'équipements dans une nacelle d'un ensemble propulsif d'aéronef tel que décrit précédemment, le procédé d'utilisation comprenant :
- une étape de régulation du flux d'air de refroidissement admis dans le compartiment par déplacement de l'organe de régulation en fonction du rapport entre la pression externe et la pression interne du compartiment, de manière à modifier la section de passage de l'orifice,
- lorsque la température interne dans le compartiment est supérieure à une température prédéterminée, une étape de mise en sécurité du compartiment par déplacement de l'organe de régulation dans une position fermée obturant l'orifice, de manière à isoler fluidiquement le compartiment en cas de feu.

L'ensemble du procédé d'utilisation est avantageusement mis en oeuvre de manière automatique, sans intervention humaine, en fonction de la pression externe, de la pression interne du compartiment et de sa température interne. L'étape de régulation permet ainsi d'adapter la section de passage de l'orifice à chaque modification du rapport entre la pression interne et la pression externe, de manière immédiate. L'étape de mise en sécurité est quant à elle configurée pour être mise en oeuvre une unique fois, de manière immédiate et non réversible.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
[Fig.1] La [Fig.1] est une représentation schématique en demi-coupe longitudinale tronquée d'un ensemble propulsif d'aéronef selon l'art antérieur ;
[Fig.2] La [Fig.2] est une représentation schématique en demi-coupe longitudinale tronquée d'un ensemble propulsif d'aéronef avec un système de refroidissement d'un compartiment d'équipements dans la nacelle selon une forme de réalisation de l'invention ;
[Fig.3] La [Fig.3] est une représentation schématique en perspective depuis l'extérieur du compartiment du système de refroidissement de la [Fig.2] ;
[Fig.4] La [Fig.4] est une représentation schématique en perspective depuis l'intérieur du compartiment du système de refroidissement de la [Fig.2] ;
[Fig.5A] La [Fig.5A] est une représentation schématique en coupe longitudinale du système de refroidissement de la [Fig.2] dans la position ouverte neutre ;
[Fig.5B] La [Fig.5B] et
[Fig.5C] La [Fig.5C] sont des représentations schématiques en coupe longitudinale du système de refroidissement de la [Fig.2] respectivement lors d'une augmentation et lors d'une diminution de la pression externe du compartiment ;
[Fig.6] La [Fig.6] est une représentation schématique en coupe longitudinale du système de refroidissement de la [Fig.2] dans la position fermée ;
[Fig.7A] et
[Fig.7B] sont des représentations schématiques en coupe longitudinale du système de refroidissement selon une forme de réalisation alternative de l'invention respectivement dans la position ouverte neutre et dans la position fermée ; et
[Fig.8] La [Fig.8] est une représentation schématique du procédé d'utilisation du système de refroidissement de la [Fig.2].

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la [Fig.2] et comme décrit dans le préambule, il est représenté un ensemble propulsif d'aéronef E s'étendant longitudinalement selon un axe X orienté d'amont en aval et comprenant un turbomoteur d'aéronef à double flux 3 et une nacelle 2 d'axe longitudinal X. Le turbomoteur d'aéronef 3 est configuré pour permettre la propulsion de l'aéronef à partir de l'accélération d'un flux d'air F circulant d'amont en aval dans le turbomoteur 3. La nacelle 2 s'étend extérieurement autour du turbomoteur d'aéronef 3. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

Comme illustré sur la [Fig.2] et décrit dans le préambule, le turbomoteur d'aéronef à double flux 3 comprend à l'amont une soufflante 31 comportant des aubes 32 permettant d'accélérer le flux d'air F et un carter de soufflante 33 s'étendant extérieurement en regard des aubes 32 de manière à guider extérieurement le flux d'air F. Le turbomoteur d'aéronef 3 comprend également, en aval de la soufflante 33, une veine primaire 34 radialement intérieure et une veine secondaire 35 radialement extérieure dans lesquelles circulent respectivement une première partie et une deuxième partie du flux d'air F, dites flux d'air primaire F1 et flux d'air secondaire F2.

Comme illustré sur la [Fig.2] et décrit dans le préambule, la nacelle 2 délimite extérieurement la veine secondaire 35 en amont du carter de soufflante 33 et comprend à son extrémité amont une entrée d'air 21. L'entrée d'air 21 comprend une paroi intérieure 22 permettant de guider extérieurement le flux d'air F et une paroi extérieure 23, opposée à la paroi intérieure 22, qui sont reliées par une lèvre d'entrée d'air 24 de manière à former une cavité annulaire 25. La nacelle 2 comprend également un capot de soufflante 26 s'étendant dans le prolongement aval de la paroi extérieure 23, le carter de soufflante 33 s'étendant dans le prolongement aval de la paroi intérieure 22 de manière opposée au capot de soufflante 26.

Toujours en référence à la [Fig.2] et comme décrit dans le préambule, le capot de soufflante 26 et le carter de soufflante 33 délimitent ensemble radialement un compartiment 4 dans lequel sont logés des équipements 41 de l'ensemble propulsif d'aéronef E. De tels équipements 41 désignent à titre d'exemples des éléments du circuit de carburant et du circuit d'huile (pompe, filtre, débitmètre, etc.), un dispositif d'ouverture d'un système d'inversion de poussée à portes, un dispositif de fourniture d'air chaud à l'entrée d'air 21, etc.

Selon l'invention et comme illustré sur la [Fig.2], la nacelle 2 comprend en outre un système de refroidissement 1 du compartiment 4 qui comprend un organe de prélèvement 10 d'un flux d'air de refroidissement Fr dans le flux d'air extérieur F ainsi qu'un dispositif d'admission 11 du flux d'air de refroidissement Fr dans le compartiment 4. Un tel système de refroidissement 1 est configuré :
- d'une part, pour assurer le refroidissement des équipements 41 pour toutes conditions de vol de l'aéronef et notamment lorsque l'aéronef est au sol et
- d'autre part, pour former un pare-feu en cas de déclenchement d'un feu dans le compartiment 4, afin d'éviter toute propagation du feu hors du compartiment 4 et notamment dans le turbomoteur 3.

Dans l'exemple de la [Fig.2], l'organe de prélèvement 10 se présente sous la forme d'une conduite s'étendant dans la cavité annulaire 25 de l'entrée d'air 21 et débouchant, d'une part, dans la paroi intérieure 22 de l'entrée d'air 21 et, d'autre part, dans le dispositif d'admission 11 du système de refroidissement 1. Un tel organe de prélèvement 10 est ainsi configuré pour prélever le flux d'air F extérieur en amont de la soufflante 31, contrairement à un système de refroidissement classique qui prélève le flux d'air de refroidissement Fr au niveau du carter de soufflante 33, à l'aval de la soufflante 31, au plus près du compartiment 4 à refroidir. Un prélèvement au niveau de l'entrée d'air 21, à l'amont de la soufflante 31 plutôt qu'à l'aval permet avantageusement un refroidissement plus efficace car le flux d'air de refroidissement Fr est plus frais. Il va de soi que l'organe de prélèvement 10 pourrait se présenter sous une autre forme et que le système de refroidissement 1 pourrait comprendre plus d'un organe de prélèvement 10.

On précise que la pression du flux d'air de refroidissement Fr prélevé dépend directement du flux d'air F extérieur, lui-même dépendant de la vitesse de l'aéronef et du régime du moteur. En pratique, la pression du flux d'air F est plus importante lorsque l'aéronef est en vol à grande vitesse que lorsqu'il est au sol ou à faible vitesse. Il en va ainsi de même pour le flux d'air de refroidissement Fr.

De telles variations de la pression du flux d'air de refroidissement Fr entraînent des variations du rapport entre la pression interne du compartiment 4 et la pression externe, qui sont exploitées par le dispositif d'admission 11, comme décrit par la suite. La pression externe est notamment supérieure à la pression interne lorsque le flux d'air de refroidissement Fr est important, à savoir en vol à grande vitesse. La pression externe est inversement inférieure à la pression interne lorsque le flux d'air de refroidissement Fr est faible, à savoir au sol.

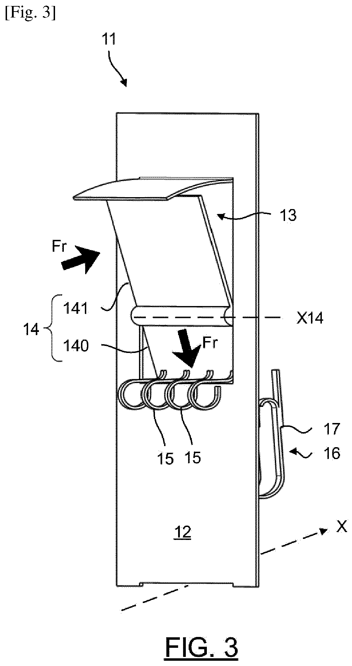

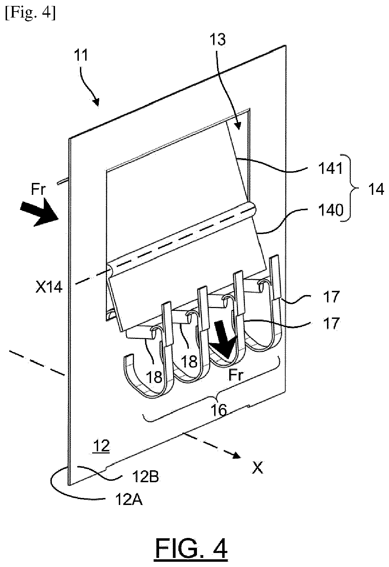

Selon l'invention et en référence aux figures 3 et 4, le dispositif d'admission 11 du système de refroidissement 1 comprend une paroi 12 délimitant en amont l'entrée du compartiment 4 et comprenant un orifice 13 de mise en communication fluidique de l'organe de prélèvement 10 et du compartiment 4. Le dispositif d'admission 11 comprend en outre :
- un organe de régulation 14 du flux d'air de refroidissement Fr admis dans le compartiment 4, qui est monté mobile au niveau de l'orifice 13 de manière à limiter la section de passage de l'orifice 13 lorsque la pression externe est supérieure à la pression interne et à l'augmenter le cas contraire,
- des organes de rappel 15 reliant la paroi 12 et l'organe de régulation 14 et configurés pour maintenir l'organe de régulation 14 ouvert dans une position prédéterminée lorsque la pression interne est égale à la pression externe et, lors de variations du flux d'air de refroidissement Fr, pour amortir le déplacement de l'organe de régulation 14,
- un dispositif de sécurité 16 comprenant des organes de plaquage 17 montés en attente sur la paroi 12 et des éléments sensibles thermiquement 18 configurés pour activer les organes de plaquage 17 au-dessus d'une température prédéterminée dans le compartiment 4, les organes de plaquage 17 étant alors configurés pour fermer l'organe de régulation 14 par un effort de plaquage supérieur à un effort de contrainte des organes de rappel 15, afin d'isoler fluidiquement le compartiment 4 en cas de feu.

Un tel dispositif d'admission 11 possède avantageusement une double fonction, permettant à la fois de contrôler le refroidissement du compartiment 4 et de l'isoler en cas de feu pour éviter toute propagation, notamment dans le turbomoteur 3. Le dispositif d'admission 11 permet de plus d'assurer un refroidissement efficace et adapté pour toutes conditions de fonctionnement de l'aéronef, en particulier lorsque l'aéronef est au sol et que le flux d'air de refroidissement Fr est faible, en augmentant la section de passage de l'orifice 13. Le dispositif d'admission 11 est passif et ne nécessite par ailleurs aucune intervention humaine. En effet, la régulation du refroidissement est astucieusement mise en oeuvre à partir de l'équilibre entre la pression externe et la pression interne du compartiment 4 et l'isolation du compartiment 4 à partir de sa température interne. Autrement dit, le flux d'air de refroidissement Fr admis varie proportionnellement avec la différence de pression entre l'intérieur et l'extérieur du compartiment 4.

On décrit par la suite plus précisément les caractéristiques structurelles et fonctionnelles de la paroi 12, de l'orifice 13, des organes de rappel 15 et du dispositif de sécurité 16.

Comme illustré sur les figures 2, 3 et 4, la paroi 12 délimite en amont le compartiment 4 et s'étend en aval de l'entrée d'air 21 de la nacelle 2, transversalement à l'axe longitudinal X. En pratique, la paroi 12 forme un anneau logé dans la nacelle 2, délimité intérieurement par le carter de soufflante 33 et extérieurement par le capot de soufflante 26.

Dans l'exemple des figures 3 et 4, l'orifice 13 est formé sur une portion de la circonférence de la paroi 12. Un tel orifice 13 permet avantageusement une alimentation suffisante en flux d'air de refroidissement Fr dans le compartiment 4. Dans cet exemple, l'orifice 13 comporte une forme parallélépipédique mais elle pourrait être différente. Il va de soi que la paroi 12 pourrait comporter un nombre quelconque d'orifices 13 de forme quelconque.

Toujours dans l'exemple des figures 3 et 4, l'organe de régulation 14 est monté mobile en rotation de manière simple et pratique. Il va toutefois de soi que l'organe de régulation 14 pourrait alternativement être déplacé autrement, notamment par translation longitudinale ou transversale à l'axe longitudinal X. Dans l'exemple des figures 3 et 4 décrit par la suite, l'organe de régulation 14 se présente sous la forme d'une vanne papillon montée mobile en rotation selon un axe X14. L'axe de montage X14 s'étend transversalement par rapport à l'axe longitudinal X de l'ensemble propulsif E de manière à ce que la vanne papillon soit configurée pour osciller d'amont en aval.

Comme illustré sur les figures 3 et 4, l'organe de régulation 14 comprend une portion de maintien 140 et une portion libre 141 s'étendant de part et d'autre de l'axe de montage X14, les organes de rappel 15 étant montés sur la portion de maintien 140. Autrement dit, les organes de rappel 15 sont configurés pour exercer un effort de contrainte sur l'organe de régulation 14 localisé sur la portion de maintien 140 tandis que le flux d'air de refroidissement Fr est configuré pour exercer un effort localisé principalement sur la portion libre 141.

Dans l'exemple des figures 3 et 4, l'axe de montage X14 de l'organe de régulation 14 est décentré de manière à ce que la longueur de la portion de maintien 140 soit réduite par rapport à la longueur de la portion libre 141. Cela permet de créer un moment proportionnel à l'écart de pression autour de l'axe de montage X14. Par ailleurs, dans cet exemple, la portion de maintien 140 et la portion libre 141 s'étendent respectivement de manière radialement intérieure et de manière radialement extérieure par rapport à l'axe de montage X14.

Comme illustré sur la [Fig.4], l'organe de régulation 14 comporte une forme parallélépipédique de taille légèrement supérieure à l'orifice 13 de manière à pouvoir obturer l'orifice 13 en appui contre la paroi 12. Cela permet d'isoler de manière étanche le compartiment 4 lors d'un départ de feu. Plus précisément, la portion de maintien 140 est configurée pour venir en appui contre la face interne de la paroi 12 tournée vers le compartiment 4. Autrement dit, la portion de maintien 140 s'étend en aval de la paroi 12 du côté du compartiment 4 tandis que la portion libre 141 s'étend en amont de la paroi 12 du côté de l'organe de prélèvement 10, contre la face externe de la paroi 12. Cela a pour effet de réduire la mobilité de l'organe de régulation 14. En effet, la paroi 12 forme un obstacle empêchant la portion de maintien 140 de s'étendre à l'amont de la paroi 12 et par suite la portion libre 141 de s'étendre à l'aval de la paroi 12. Il en résulte que le flux d'air de refroidissement Fr arrivant au niveau de la paroi 12 est guidé successivement par la portion de maintien 140 et la portion libre 141 d'extérieur en intérieur par rapport à l'axe de montage X14 et est admis dans le compartiment 4 orienté vers l'intérieur.

On décrit par la suite plus précisément la mobilité de l'organe de régulation 14 à travers la description des organes de rappel 15 et du dispositif de sécurité 16.

Dans l'exemple de la [Fig.3], le dispositif d'admission 11 comprend quatre organes de rappel 15 se présentant sous la forme de ressorts de contrainte 15 montés sur la paroi 12 de manière équidistante et alignés parallèlement à l'axe de montage X14. Ceci permet d'appliquer un effort de contrainte sur l'organe de régulation 14, et plus précisément sur la portion de maintien 140, qui est réparti en plusieurs points locaux, pour un meilleur contrôle de la mobilité de l'organe de régulation 14 et pour garantir leur fonctionnement en cas de défaillance de l'un d'entre eux. Il va cependant de soi que le dispositif d'admission 11 pourrait comprendre un nombre quelconque de ressorts de contrainte 15 en fonction de la taille de l'orifice 13, de préférence au moins deux pour répartir l'effort de contrainte. Il va également de soi que les ressorts de contrainte 15 pourraient être montés autrement. On décrit par la suite un unique ressort de contrainte 15, cette description étant valable pour les autres ressorts de contrainte 15.

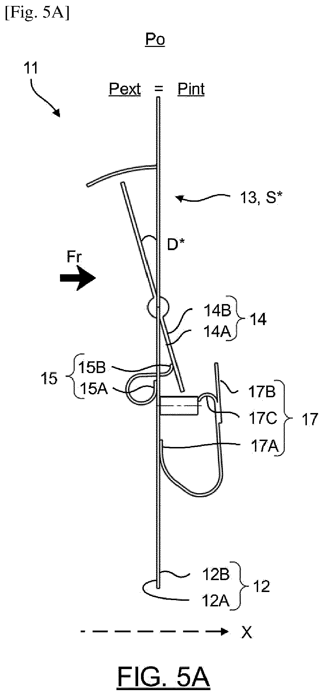

En référence aux figures 5A à 5C, le ressort de contrainte 15 se présente sous la forme d'une lame ressort comprenant une première extrémité de support 15A solidarisée à la paroi 12 et une deuxième extrémité de support 15B solidarisée à l'organe de régulation 14 au niveau de la portion de maintien 140. Dans cet exemple, les extrémités de support 14A, 15B sont montées sur la face externe 12A, 14A de la paroi 12 et de l'organe de régulation 14 située à l'amont. Les extrémités de support 14A, 14B sont de plus recourbées pour augmenter l'élasticité du ressort de contrainte 15.

Comme illustré sur la [Fig.5A] et décrit précédemment, le ressort de contrainte 15 est configuré au repos, à savoir lorsque la pression interne Pint du compartiment 4 est égale à la pression externe Pext, pour maintenir l'organe de régulation 14 dans une position ouverte neutre Po. L'organe de régulation 14 dans la position ouverte neutre Po comporte de préférence un angle d'ouverture D* par rapport à la paroi 12 compris entre 10 et 30°. Dans la position ouverte neutre Po, l'organe de régulation 14 définit une section de passage prédéterminée S* adaptée pour permettre un refroidissement suffisant lors d'un équilibre de pression.

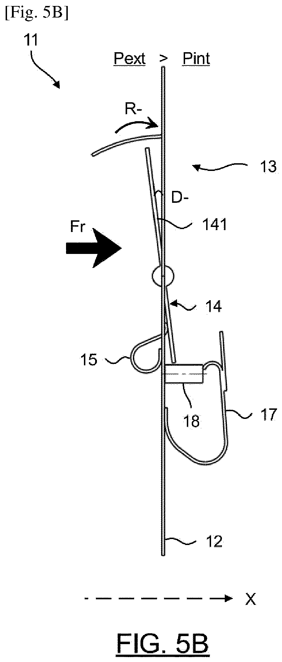

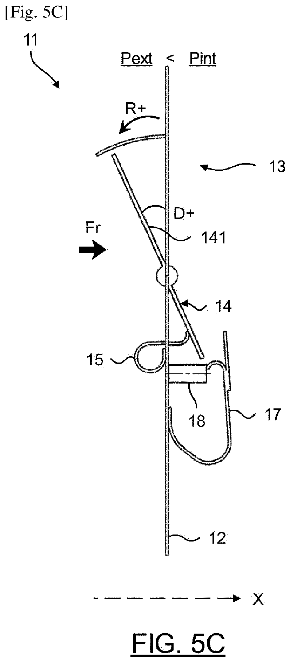

Comme illustré sur les figures 5B et 5C et décrit précédemment, le ressort de contrainte 15 est également configuré, lors d'une modification du rapport entre la pression interne Pint et la pression externe Pext, pour amortir la rotation R-, R+ de l'organe de régulation 14.

Dans l'exemple de la [Fig.5B] illustrant une augmentation de la pression externe Pext par rapport à la pression interne Pint, le flux d'air de refroidissement Fr augmente et exerce un effort plus important sur la portion libre 141 de l'organe de régulation 14. Un tel effort tend à déplacer la portion libre 141 vers l'aval selon un premier sens de rotation R- de l'organe de régulation 14. Un tel effort a également pour effet de compresser le ressort de contrainte 15 qui exerce alors un effort de contrainte qui limite la rotation R- de l'organe de régulation 14 vers une nouvelle position ouverte d'équilibre. Dans la nouvelle position ouverte, l'organe de régulation 14 comporte ainsi un angle d'ouverture réduit D- et définit une section de passage réduite, de manière à réduire le flux d'air de refroidissement Fr admis dans le compartiment 4.

De manière opposée, dans l'exemple de la [Fig.5C] illustrant une diminution de la pression externe Pext par rapport à la pression interne Pint, le flux d'air de refroidissement Fr diminue et exerce un effort moins important sur la portion libre 141 de l'organe de régulation 14. Un tel effort tend à déplacer la portion libre 141 vers l'amont selon un deuxième sens de rotation R+ opposé au premier sens de rotation R-. Un tel effort a également pour effet de détendre le ressort de contrainte 15 qui exerce alors un effort de contrainte inverse qui limite la rotation R+ de l'organe de régulation 14 vers une nouvelle position ouverte d'équilibre. Dans la nouvelle position ouverte, l'organe de régulation 14 comporte ainsi un angle d'ouverture étendu D+ et définit une section de passage étendue, de manière à augmenter le flux d'air de refroidissement Fr admis dans le compartiment 4.

Pour résumer, le ressort de contrainte 15 maintient au repos l'organe de régulation 14 dans une position ouverte neutre Po et lorsqu'il est compressé ou détendu suite à une modification du flux d'air de refroidissement Fr, le ressort de contrainte 15 exerce un effort de contrainte qui amortit la rotation R-, R+ de l'organe de régulation 14. De manière alternative, l'organe de rappel 15 pourrait se présenter sous une forme autre qu'un ressort de contrainte 15, de préférence un organe passif ne nécessitant aucune intervention humaine.

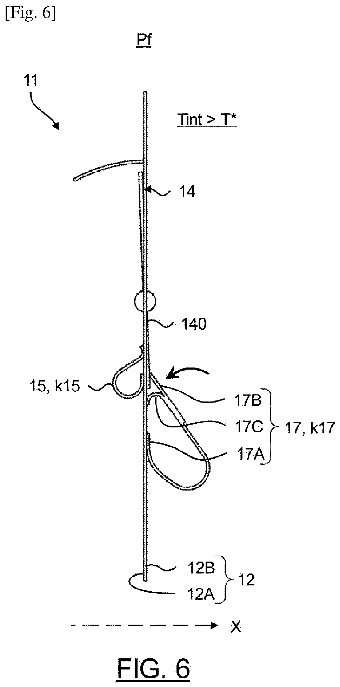

Dans l'exemple des figures 4 et 6, le dispositif de sécurité 16 comprend quatre organes de plaquage 17 montés sur la face interne 12B aval de la paroi 12, en vis-à-vis des ressorts de contrainte 15 montées sur la face externe 12A amont. Un tel montage en vis-à-vis permet avantageusement, en cas de départ de feu, d'opposer chaque organe de plaquage 17 à un ressort de contrainte 15, de manière à ce que l'effort de plaquage d'un organe de plaquage 17 s'oppose et surpasse l'effort de contrainte du ressort de contrainte 15 en regard. Dans cet exemple, le dispositif de sécurité 16 comprend en outre quatre éléments sensibles thermiquement 18 configurés pour activer chacun un organe de plaquage 17. Il va de soi que le dispositif de sécurité 16 peut comprendre un nombre quelconque d'organes de plaquage 17 et d'éléments sensibles thermiquement 18, positionnés de manière quelconque. On décrit par la suite un unique organe de plaquage 17 et un unique élément sensible thermiquement 18, cette description étant valable pour les autres.

Comme illustré sur la [Fig.4], l'élément sensible thermiquement 18 est monté sur la paroi 12, au niveau de la face interne 12B aval, de manière à être au contact de la température interne Tint du compartiment 4. Comme illustré sur la [Fig.6], l'élément sensible thermiquement 18 est configuré pour fondre lorsque la température interne Tint du compartiment 4 est supérieure à une température prédéterminée T*, de manière à activer l'organe de plaquage 17. En pratique, la température prédéterminée T* est comprise entre 200°C et 600°C, de préférence entre 350°C et 450°C, à savoir représentative d'un départ de feu dans le compartiment 4. De préférence, l'élément sensible thermiquement 18 comporte un alliage d'aluminium de température de fusion correspondant à la température prédéterminée T*, tel qu'un alliage d'aluminium et de cuivre de température de fusion sensiblement égale à 400°C à titre d'exemple.

En référence aux figures 4 et 6, l'organe de plaquage 17 se présente quant à lui sous la forme d'un ressort de plaquage 17, et plus précisément d'une lame ressort, monté sur la paroi 12 et retenu en attente par l'élément sensible thermiquement 18. Le ressort de plaquage 17 est configuré, une fois libéré par l'élément sensible thermiquement 18, pour exercer un effort de plaquage sur la portion de maintien 140 de l'organe de régulation 14, de manière à la plaquer contre la paroi 12, et ainsi déplacer l'organe de régulation 14 dans une position fermée Pf ([Fig.6]) obturant l'orifice 13. En pratique, le ressort de plaquage 17 comprend une constante de raideur k17 supérieure à celle k15 du ressort de contrainte 15, de préférence au moins deux fois supérieure, de manière à déplacer l'organe de régulation 14 de manière rapide et immédiate, en surpassant l'effort de contrainte exercé par le ressort de contrainte 15.

Dans l'exemple des figures 5A et 6, le ressort de plaquage 17 comprend une première extrémité de support 17A solidarisée à la paroi 12, une deuxième extrémité de support 17C montée sur l'élément sensible thermiquement 18 de manière à retenir le ressort de plaquage 17 en attente ainsi qu'une extrémité libre 17B configurée pour exercer l'effort de plaquage sur la portion de maintien 140 de l'organe de régulation 14. Dans cet exemple, les extrémités de support 17A, 17C du ressort de plaquage 17 sont recourbées pour augmenter son élasticité. L'extrémité libre 17B s'étend quant à elle en saillie en aval de la portion de maintien 140 de l'organe de régulation 14 de manière à pouvoir la déplacer vers l'amont contre la paroi 12. En référence à la [Fig.5A], le ressort de plaquage 17 est précontraint et possède une réserve d'énergie pour fermer l'organe de régulation 14 comme cela sera présenté par la suite.

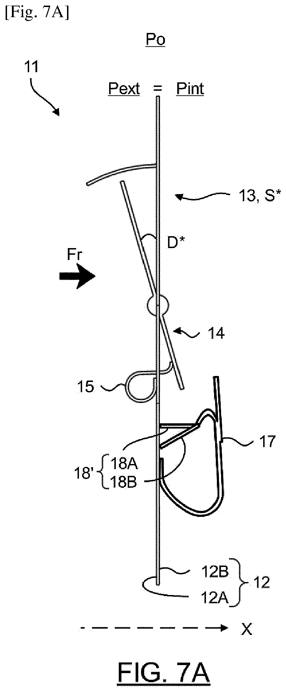

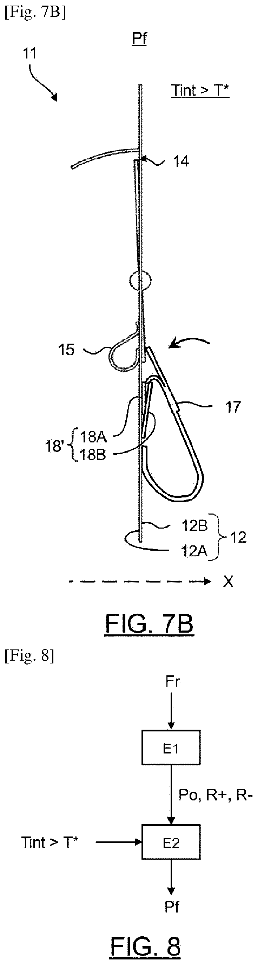

Les figures 7A et 7B illustrent une forme de réalisation alternative de l'invention dans laquelle l'élément sensible thermiquement 18' se présente sous la forme de deux lames 18A, 18B reliant l'organe de plaquage 17 à la paroi 12 et comportant un matériau de coefficient de dilatation thermique différent. Les lames 18A, 18B sont ainsi configurées pour se dilater de manière différente lorsque la température interne Tint du compartiment 4 est supérieure à la température prédéterminée T*, de manière à déplacer l'organe de plaquage 17 en position fermée Pf. Dans cet exemple, les lames 18A, 18B sont toutes les deux montées sur la deuxième extrémité de support 17C ( [Fig.6]) de l'organe de plaquage 17, la première lame 18A étant montée extérieurement à la deuxième lame 18B sur la paroi 12. De plus, dans cet exemple, la deuxième lame 18B comporte un coefficient de dilatation thermique supérieur à celui de la première lame 18A. Ainsi, lors d'un départ de feu, la deuxième lame 18B est configurée pour se dilater davantage que la première lame 18A ce qui déplace l'organe de plaquage 17 contre la paroi 12 dans la position fermée Pf. Il va de soi que l'élément sensible thermiquement 18' pourrait comprendre plus de deux lames 18A, 18B.

Pour résumer, le système de refroidissement 1 de l'invention comporte un organe de prélèvement 10 d'un flux d'air de refroidissement Fr et un dispositif d'admission 11 du flux d'air de refroidissement Fr dans le compartiment 4, comprenant un organe de régulation 14 monté dans l'orifice 13 d'une paroi 12. L'organe de régulation 14 est configuré, en coopération avec des ressorts de contrainte 15, pour modifier la section de passage de l'orifice 13 en fonction de la différence de pression entre l'intérieur et l'extérieur du compartiment 4 et, en coopération avec un dispositif de sécurité 16, pour obturer l'orifice 13 lors d'un départ de feu dans le compartiment 4. Le système de refroidissement 1 de l'invention permet avantageusement de refroidir le compartiment 4 pour toutes conditions de fonctionnement de l'aéronef, notamment au sol en présence d'un flux d'air de refroidissement Fr faible grâce à une section de passage plus importante.

On précise que, si l'invention a été décrite dans le cas d'un turbomoteur d'aéronef à double flux, elle s'applique à un turbomoteur quelconque, qu'il s'agisse notamment d'un turboréacteur ou un turbopropulseur et qu'il présente une architecture à simple flux ou à double flux.

En référence à la [Fig.8], l'invention concerne également un procédé d'utilisation du système de refroidissement 1 comprenant :
- une étape de régulation E1 du flux d'air de refroidissement Fr admis dans le compartiment 4 par déplacement de l'organe de régulation 14, dans cet exemple en rotation, en fonction du rapport entre la pression externe Pext et la pression interne Pint du compartiment 4, de manière à modifier la section de passage de l'orifice 13,
- et lorsque la température interne Tint dans le compartiment 4 est supérieure à la température prédéterminée T*, une étape de mise en sécurité E2 du compartiment 4 par déplacement de l'organe de régulation 14 dans la position fermée Pf, de manière à isoler fluidiquement le compartiment 4 en cas de feu.

En pratique, en référence aux figures 5B et 5C, l'étape de régulation E1 est mise en oeuvre en adaptant l'angle d'ouverture D-, D+ de l'organe de régulation 14 en fonction du flux d'air de refroidissement Fr. Ainsi, lors d'une augmentation de la pression du flux d'air de refroidissement Fr prélevé, par exemple lors du vol de l'aéronef à grande vitesse, celui-ci exerce un effort plus important sur la portion libre 141 de l'organe de régulation 14, ce qui tend à réduire l'ouverture de l'orifice 13 et donc à admettre moins de flux d'air de refroidissement Fr dans le compartiment 4. Inversement, lors d'une diminution de la pression du flux d'air de refroidissement Fr prélevé, par exemple lorsque l'aéronef est au sol ou à faible vitesse, celui-ci exerce un effort moins important sur la portion libre 141 de l'organe de régulation 14, ce qui tend à augmenter l'ouverture de l'orifice 13 et donc à admettre plus de flux d'air de refroidissement Fr dans le compartiment 4.

Une telle étape de régulation E1 ne nécessite avantageusement aucune intervention humaine et aucun contrôle actif et permet de refroidir de manière efficace les équipements 41 du compartiment 4 pour toutes conditions de fonctionnement de l'aéronef.

L'étape de mise en sécurité E2 est quant à elle mise en oeuvre par l'organe de plaquage 17 retenu en attente par l'élément sensible thermiquement 18, c'est-à-dire de manière immédiate, automatique et irréversible. Dès que la température intérieure Tint du compartiment 4 est supérieure à la température prédéterminée T*, l'élément sensible thermiquement 18 fond, ce qui libère la force du ressort de plaquage 17 qui vient se plaquer contre la face interne 12B de la paroi 12. En particulier, l'extrémité libre 17B exerce un effort de plaquage sur la portion de maintien 140 de l'organe de régulation 14 qui est supérieure à celui du ressort de contrainte 15 situé en vis-à-vis. La deuxième extrémité de support 17C entre en butée contre la face interne 12B de la paroi 12 pour limiter l'effort appliqué sur l'organe de régulation 14 en position fermée.

Ceci permet d'isoler fluidiquement le compartiment 4 dès le départ du feu afin d'éviter toute propagation hors du compartiment 4, notamment dans le turbomoteur 3.

## Revendications

1. Système de refroidissement (1) d'un compartiment (4) d'équipements (41) dans une nacelle (2) d'un ensemble propulsif d'aéronef (E), ledit système de refroidissement (1) comprenant au moins un organe de prélèvement (10) d'un flux d'air de refroidissement (Fr) à partir d'un flux d'air (F) extérieur à la nacelle (2) et au moins un dispositif d'admission (11) du flux d'air de refroidissement (Fr) dans le compartiment (4), ledit dispositif d'admission (11) comprenant :
• au moins une paroi (12) configurée pour délimiter l'entrée du compartiment (4) et comprenant au moins un orifice (13) de mise en communication fluidique de l'organe de prélèvement (10) et du compartiment (4),
• au moins un organe de régulation (14) du flux d'air de refroidissement (Fr) admis dans le compartiment (4), ledit organe de régulation (14) étant monté mobile au niveau de l'orifice (13) et étant configuré pour se déplacer de manière passive sous l'effet de l'effort exercé par le flux d'air de refroidissement (Fr) :
• selon un premier sens de déplacement (R-) limitant la section de passage de l'orifice (13) lorsque la pression interne (Pint) du compartiment (4) est inférieure à la pression externe (Pext), de manière à limiter le flux d'air de refroidissement (Fr) admis, et
• selon un deuxième sens de déplacement (R+) augmentant la section de passage de l'orifice (13) lorsque la pression interne (Pint) est supérieure à la pression externe (Pext), de manière à augmenter le flux d'air de refroidissement (Fr) admis,
• au moins un organe de rappel (15) reliant la paroi (12) et l'organe de régulation (14) et configuré :
• lorsque la pression interne (Pint) est égale à la pression externe (Pext), pour maintenir l'organe de régulation (14) dans une position ouverte neutre (Po) définissant une section de passage prédéterminée (S*) et
• lors de modifications du rapport entre la pression interne (Pint) et la pression externe (Pext), pour amortir le déplacement (R-, R+) de l'organe de régulation (14) par rapport à la position ouverte neutre (Po),
• au moins un dispositif de sécurité (16) comprenant au moins un organe de plaquage (17) monté en attente sur la paroi (12) et configuré pour exercer un effort de plaquage sur l'organe de régulation (14) supérieur à un effort de contrainte de l'organe de rappel (15), de manière à déplacer l'organe de régulation (14) dans une position fermée (Pf) obturant l'orifice (13), afin d'isoler fluidiquement le compartiment (4) en cas de feu, le dispositif de sécurité (16) comprenant au moins un élément sensible thermiquement (18, 18') configuré pour activer l'organe de plaquage (17) lorsque la température interne (Tint) du compartiment (4) est supérieure à une température prédéterminée (T*).

2. Système de refroidissement (1) selon la revendication 1, dans lequel l'organe de régulation (14) est monté mobile en rotation.

3. Système de refroidissement (1) selon l'une des revendications 1 et 2, dans lequel l'organe de régulation (14) se présente sous la forme d'une vanne papillon (14) montée selon un axe (X14) délimitant une portion de maintien (140), sur laquelle est montée l'organe de rappel (15), et une portion libre (141).

4. Système de refroidissement (1) selon la revendication 3, dans lequel l'axe (X14) de montage de l'organe de régulation (14) est décentré, la portion de maintien (140) ayant une longueur réduite par rapport à celle de la portion libre (141).

5. Système de refroidissement (1) selon l'une des revendications 3 et 4, dans lequel, dans la position ouverte neutre (Po), la portion libre (141) de l'organe de régulation (14) s'étend en saillie vers l'extérieur du compartiment (4).

6. Système de refroidissement (1) selon l'une des revendications 1 à 5, dans lequel l'organe de rappel (15) et l'organe de plaquage (17) sont respectivement configurés pour exercer un effort de contrainte et un effort de plaquage sur des faces opposées (14A, 14B) de l'organe de régulation (14).

7. Système de refroidissement (1) selon l'une des revendications 1 à 6, dans lequel l'organe de plaquage (17) se présente sous la forme d'un ressort de plaquage (17), et de préférence, l'organe de rappel (15) se présente sous la forme d'un ressort de contrainte (15).

8. Système de refroidissement (1) selon la revendication 7, dans lequel l'élément sensible thermiquement (18, 18') est monté de manière à retenir l'organe de plaquage (17) contraint lorsque la température interne (Tint) du compartiment (4) est inférieure à la température prédéterminée (T*).

9. Système de refroidissement (1) selon l'une des revendications 1 à 8, dans lequel l'élément sensible thermiquement (18) comporte un matériau configuré pour fondre lorsque la température interne (Tint) du compartiment (4) est supérieure à la température prédéterminée (T*).

10. Système de refroidissement (1) selon l'une des revendications 1 à 9, dans lequel l'élément sensible thermiquement (18') comporte au moins deux matériaux configurés pour se dilater de manière différente lorsque la température interne (Tint) du compartiment (4) est supérieure à la température prédéterminée (T*).

11. Nacelle (2) d'un ensemble propulsif d'aéronef (E) comprenant un turbomoteur (3) s'étendant longitudinalement selon un axe (X) orienté d'amont en aval et configuré pour permettre la propulsion de l'aéronef à partir de l'accélération d'un flux d'air (F) circulant d'amont en aval dans le turbomoteur (3), ladite nacelle (2) s'étendant extérieurement autour du turbomoteur (3) selon l'axe longitudinal (X), délimitant extérieurement le compartiment (4) et comprenant à l'amont une entrée d'air (21), ladite entrée d'air (21) comprenant une paroi intérieure (22) permettant de guider le flux d'air (F) et une paroi extérieure (23), opposée à la paroi intérieure (22), qui sont reliées par une lèvre d'entrée d'air (24), ladite nacelle (2) comprenant un système de refroidissement (1) selon l'une des revendications 1 à 10, dans lequel l'organe de prélèvement (10) débouche dans la paroi intérieure (22) de l'entrée d'air (21) de manière à prélever le flux d'air (F).

12. Procédé d'utilisation d'un système de refroidissement (1) d'un compartiment (4) d'équipements (41) dans une nacelle (2) d'un ensemble propulsif d'aéronef (E) selon l'une des revendications 1 à 10, le procédé d'utilisation comprenant :
• une étape de régulation (E1) du flux d'air de refroidissement (Fr) admis dans le compartiment (4) par déplacement passif de l'organe de régulation (14) sous l'effet de l'effort exercé par le flux d'air de refroidissement (Fr) en fonction du rapport entre la pression externe (Pext) et la pression interne (Pint) du compartiment (4), de manière à modifier la section de passage de l'orifice (13),
• lorsque la température interne (Tint) dans le compartiment (4) est supérieure à une température prédéterminée (T*), une étape de mise en sécurité (E2) du compartiment (4) par déplacement de l'organe de régulation (14) dans une position fermée (Pf) obturant l'orifice (13), de manière à isoler fluidiquement le compartiment (4) en cas de feu.

## Patentansprüche

1. Kühlsystem (1) eines Raums (4) für Ausrüstungen (41) in einer Gondel (2) einer Flugzeugantriebsanordnung (E), wobei das Kühlsystem (1) mindestens ein Organ (10) zur Entnahme eines Kühlluftstroms (Fr) aus einem Luftstrom (F) außerhalb der Gondel (2) und mindestens eine Vorrichtung (11) zum Einlass des Kühlluftstroms (Fr) in den Raum (4) umfasst, wobei die Einlassvorrichtung (11) umfasst:
• mindestens eine Wand (12), die so ausgelegt ist, dass sie den Eingang des Raums (4) begrenzt und mindestens eine Öffnung (13) zur Herstellung einer Fluidverbindung zwischen dem Entnahmeorgan (10) und dem Raum (4) umfasst,
• mindestens ein Organ (14) zur Regulierung des Kühlluftstroms (Fr), der in den Raum (4) eingelassen wird, wobei das Regulierorgan (14) im Bereich der Öffnung (13) beweglich angebracht und so ausgelegt ist, dass es sich unter der Wirkung der durch den Kühlluftstrom (Fr) ausgeübten Kraft passiv verschiebt:
• in einer ersten Verschieberichtung (R-), die den Durchgangsquerschnitt der Öffnung (13) begrenzt, wenn der Innendruck (Pint) des Raums (4) niedriger als der Außendruck (Pext) ist, um den eingelassenen Kühlluftstrom (Fr) zu begrenzen, und
• in einer zweiten Verschieberichtung (R+), die den Durchgangsquerschnitt der Öffnung (13) vergrößert, wenn der Innendruck (Pint) höher als der Außendruck (Pext) ist, um den eingelassenen Kühlluftstrom (Fr) zu vergrößern,
• mindestens ein Rückstellorgan (15), das die Wand (12) und das Regulierorgan (14) verbindet und ausgelegt ist, um:
• wenn der Innendruck (Pint) gleich dem Außendruck (Pext) ist, das Regulierorgan (14) in einer neutralen offenen Position (Po) zu halten, die einen vorbestimmten Durchlassquerschnitt (S*) definiert, und
• bei Änderungen des Verhältnisses zwischen dem Innendruck (Pint) und dem Außendruck (Pext) die Verschiebung (R-, R+) des Regulierorgans (14) in Bezug auf die neutrale offene Position (Po) zu dämpfen,
• mindestens eine Sicherheitsvorrichtung (16), die mindestens ein Druckelement (17) umfasst, das in Bereitschaft an der Wand (12) angebracht und so ausgelegt ist, dass es eine Druckkraft auf das Regulierorgan (14) ausübt, die größer ist als eine Beanspruchungskraft des Rückstellorgans (15), so dass das Regulierorgan (14) in eine geschlossene Position (Pf) verschoben wird, die die Öffnung (13) verschließt, um den Raum (4) im Brandfall fluidisch zu isolieren, wobei die Sicherheitsvorrichtung (16) mindestens ein thermisch empfindliches Element (18, 18') umfasst, das so ausgelegt ist, dass es das Druckelement (17) aktiviert, wenn die Innentemperatur (Tint) des Raums (4) höher als eine vorbestimmte Temperatur (T*) ist.

2. Kühlsystem (1) nach Anspruch 1, wobei das Regulierorgan (14) drehbar gelagert ist.

3. Kühlsystem (1) nach einem der Ansprüche 1 oder 2, wobei das Regulierorgan (14) in Form einer Drosselklappe (14) vorliegt, die gemäß einer Achse (X14) angebracht ist, die einen Halteabschnitt (140), an dem das Rückstellorgan (15) angebracht ist, und einen freien Abschnitt (141) begrenzt.

4. Kühlsystem (1) nach Anspruch 3, wobei die Montageachse (X14) des Regulierorgans (14) außermittig angeordnet ist, wobei der Halteabschnitt (140) eine im Verhältnis zum freien Abschnitt (141) verkürzte Länge hat.

5. Kühlsystem (1) nach einem der Ansprüche 3 oder 4, wobei sich in der neutralen offenen Position (Po) der freie Abschnitt (141) des Regulierorgans (14) vorstehend nach außerhalb des Raums (4) erstreckt.

6. Kühlsystem (1) nach einem der Ansprüche 1 bis 5, wobei das Rückstellorgan (15) und das Druckelement (17) jeweils so ausgelegt sind, dass sie eine Beanspruchungskraft und eine Druckkraft auf gegenüberliegende Flächen (14A, 14B) des Regulierorgans (14) ausüben.

7. Kühlsystem (1) nach einem der Ansprüche 1 bis 6, wobei das Druckelement (17) in Form einer Druckfeder (17) vorliegt und vorzugsweise das Rückstellorgan (15) in Form einer Spannfeder (15) vorliegt.

8. Kühlsystem (1) nach Anspruch 7, wobei das thermisch empfindliche Element (18, 18') so angebracht ist, dass es das gespannte Druckelement (17) hält, wenn die Innentemperatur (Tint) des Raums (4) unter der vorbestimmten Temperatur (T*) liegt.

9. Kühlsystem (1) nach einem der Ansprüche 1 bis 8, wobei das thermisch empfindliche Element (18) ein Material aufweist, das so ausgelegt ist, dass es schmilzt, wenn die Innentemperatur (Tint) des Raums (4) höher als die vorbestimmte Temperatur (T*) ist.

10. Kühlsystem (1) nach einem der Ansprüche 1 bis 9, wobei das thermisch empfindliche Element (18') mindestens zwei Materialien aufweist, die so ausgelegt sind, dass sie sich unterschiedlich ausdehnen, wenn die Innentemperatur (Tint) des Raums (4) höher als die vorbestimmte Temperatur (T*) ist.

11. Gondel (2) einer Flugzeugantriebsanordnung (E) mit einem Turbomotor (3), der sich in Längsrichtung entlang einer von stromaufwärts nach stromabwärts gerichteten Achse (X) erstreckt und so ausgelegt ist, dass er den Antrieb des Luftfahrzeugs ausgehend von der Beschleunigung eines Luftstroms (F) ermöglicht, der in dem Turbomotor (3) von stromaufwärts nach stromabwärts zirkuliert, wobei sich die Gondel (2) außen um den Turbomotor (3) gemäß der Längsachse (X) erstreckt, außen den Raum (4) begrenzt und stromaufwärts einen Lufteinlass (21) umfasst, wobei der Lufteinlass (21) eine Innenwand (22), die es ermöglicht, den Luftstrom (F) zu führen, und eine Außenwand (23), die der Innenwand (22) gegenüberliegt, umfasst, die durch eine Lufteinlasslippe (24) verbunden sind, wobei die Gondel (2) ein Kühlsystem (1) nach einem der Ansprüche 1 bis 10 umfasst, wobei das Entnahmeorgan (10) in die Innenwand (22) des Lufteinlasses (21) mündet, um den Luftstrom (F) zu entnehmen.

12. Verfahren zur Verwendung eines Kühlsystems (1) eines Raums (4) für Ausrüstungen (41) in einer Gondel (2) einer Flugzeugantriebsanordnung (E) nach einem der Ansprüche 1 bis 10, wobei das Verfahren zur Verwendung umfasst:
• einen Schritt der Regulierung (E1) des in den Raum (4) eingelassenen Kühlluftstroms (Fr) durch passive Verschiebung des Regulierorgans (14) unter der Wirkung der durch den Kühlluftstrom (Fr) ausgeübten Kraft in Abhängigkeit vom Verhältnis zwischen dem Außendruck (Pext) und dem Innendruck (Pint) des Raums (4), so dass der Durchgangsquerschnitt der Öffnung (13) verändert wird,
• wenn die Innentemperatur (Tint) im Raum (4) höher als eine vorbestimmte Temperatur (T*) ist, einen Schritt zur Sicherung (E2) des Raums (4) durch Verschiebung des Regulierorgans (14) in eine geschlossene Position (Pf), wodurch die Öffnung (13) verschlossen wird, um das Raum (4) im Falle eines Brandes fluidisch zu isolieren.

## Claims

1. A cooling system (1) for a compartment (4) of pieces of equipment (41) in a nacelle (2) of an aircraft propelling assembly (E), said cooling system (1) comprising at least one collecting member (10) for collecting a cooling air flow (Fr) from an air flow (F) external to the nacelle (2) and at least one intake device (11) for taking the cooling air flow (Fr) into the compartment (4), said intake device (11) comprising:
- at least one wall (12) configured to delimit the inlet of the compartment (4) and comprising at least one port (13) for fluidly communicating the collecting member (10) with the compartment (4),
- at least one regulation member (14) for regulating the cooling air flow (Fr) taken into the compartment (4), said regulation member (14) being movably mounted at the port (13) and being configured to move passively under the effect of the load exerted by the cooling air flow (Fr):
- in a first direction of movement (R-) limiting cross-sectional area of the port (13) when the internal pressure (Pint) in the compartment (4) is less than the external pressure (Pext), in order to limit the cooling air flow (Fr) taken in, and
- in a second direction of movement (R+) increasing cross-sectional area of the port (13) when the internal pressure (Pint) is greater than the external pressure (Pext), so as to increase the cooling air flow (Fr) taken in;
- at least one return member (15) connecting the wall (12) and the regulation member (14) and configured:
- when the internal pressure (Pint) is equal to the external pressure (Pext), to hold the regulation member (14) in a neutral open position (Po) defining a predetermined cross-sectional area (S*) and
- during changes in the ratio between the internal pressure (Pint) and the external pressure (Pext), to dampen the travel (R-, R+) of the regulation member (14) in relation to the neutral open position (Po),
- at least one safety device (16) comprising at least one pressing member (17) mounted in standby mode to the wall (12) and configured to exert a pressing load on the regulation member (14) greater than a stress load from the return member (15), so as to move the regulation member (14) into a closed position (Pf) blocking the port (13), in order to fluidly isolate the compartment (4) in the event of a fire, the safety device (16) comprising at least one thermally sensitive element (18, 18') configured to activate the pressing member (17) when the internal temperature (Tint) of the compartment (4) is greater than a predetermined temperature (T*).

2. The cooling system (1) according to claim 1, wherein the regulation member (14) is rotatably mounted.

3. The cooling system (1) according to any one of claims 1 and 2, wherein the regulation member (14) is in the form of a butterfly valve (14) mounted along an axis (X14) delimiting a holding portion (140), to which the return member (15) is mounted, and a free portion (141).

4. The cooling system (1) according to claim 3, wherein the axis (X14) for mounting the regulation member (14) is off-centered, the holding portion (140) having a reduced length relative to the free portion (141).

5. The cooling system (1) according to any one of claims 3 and 4, wherein, in the neutral open position (Po), the free portion (141) of the regulation member (14) protrudes outwardly of the compartment (4).

6. The cooling system (1) according to any one of claims 1 to 5, wherein the return member (15) and the pressing member (17) are respectively configured to exert a stress load and a pressing load on opposite faces (14A, 14B) of the regulation member (14).

7. The cooling system (1) according to any one of claims 1 to 6, wherein the pressing member (17) is in the form of a pressing spring (17), and preferably wherein the return member (15) is in the form of a stress spring (15).

8. The cooling system (1) according to claim 7, wherein the thermally sensitive element (18, 18') is mounted to retain the pressing member (17) stressed when the internal temperature (Tint) of the compartment (4) is less than the predetermined temperature (T*).

9. The cooling system (1) according to any one of claims 1 to 8, wherein the thermally sensitive element (18) comprises a material configured to melt when the internal temperature (Tint) of the compartment (4) is greater than the predetermined temperature (T*).

10. The cooling system (1) according to any one of claims 1 to 9, wherein the thermally sensitive element (18') comprises at least two materials configured to expand differently when the internal temperature (Tint) of the compartment (4) is greater than the predetermined temperature (T*).

11. A nacelle (2) of an aircraft propelling assembly (E) comprising a turbine engine (3) extending longitudinally along an axis (X) oriented from upstream to downstream, and configured to allow propulsion of the aircraft from the acceleration of an air flow (F) circulating from upstream to downstream in the turbine engine (3), said nacelle (2) extending externally around the turbine engine (3) along the longitudinal axis (X), externally delimiting the compartment (4) and upstream comprising an air inlet (21), said air inlet (21) comprising an internal wall (22) for guiding the air flow (F) and an external wall (23), opposite to the internal wall (22), which are connected through an air inlet lip (24), said nacelle (2) comprising a cooling system (1) according to any of claims 1 to 10, wherein the collecting member (10) opens into the internal wall (22) of the air inlet (21) so as to collect the air flow (F).

12. A method for operating a cooling system (1) of a compartment (4) of pieces of equipment (41) in a nacelle (2) of an aircraft propelling assembly (E) according to any one of claims 1 to 10, the operating method comprising:
- a step of regulating (E1) the cooling air flow (Fr) taken into the compartment (4) by passively moving the regulation member (14) under the effect of the load exerted by the cooling air flow (Fr) as a function of the ratio between the external pressure (Pext) and the internal pressure (Pint) of the compartment (4), in order to modify the cross-sectional area of the port (13),
- when the internal temperature (Tint) in the compartment (4) is greater than a predetermined temperature (T*), a step of securing (E2) the compartment (4) by moving the regulation member (14) into a closed position (Pf) blocking the port (13), in order to fluidly isolate the compartment (4) in the event of a fire.
